# EUROPÄISCHE PATENTSCHRIFT

(11) **EP 2 370 251 B1**
(45) Veröffentlichungstag und Bekanntmachung des Hinweises auf die Patenterteilung: **20.04.2016**
(21) Anmeldenummer: 09799645.8
(22) Anmeldetag: 28.12.2009
(51) Int. Cl.: B32B 15/08, F16C 33/20

(54) **GLEITELEMENT UND VERFAHREN ZU SEINER HERSTELLUNG**
SLIDING ELEMENT AND METHOD FOR THE PRODUCTION THEREOF
ÉLÉMENT DE GLISSEMENT ET SON PROCÉDÉ DE FABRICATION

(30) Priorität: 30.12.2008 DE 102008055195
(43) Veröffentlichungstag der Anmeldung: 05.10.2011
(73) Patentinhaber: Federal-Mogul Wiesbaden GmbH, 65201 Wiesbaden (DE)
(72) Erfinder: ADAM, Achim, 64569 Nauheim (DE)
(74) Vertreter: Mehler Achler
(86) Internationale Anmeldenummer: PCT/EP2009/067960
(87) Internationale Veröffentlichungsnummer: WO 2010/076307

(56) Entgegenhaltungen:
- WO-A1-03/026884

## Beschreibung

Die Erfindung betrifft ein Gleitelement mit einer metallischen Stützschicht, mit einer darauf aufgebrachten porösen metallischen Trägerschicht und mit einer auf der Trägerschicht aufgebrachten Gleitschicht der Dicke D, die mindestens ein Thermoplastmaterial als Matrixmaterial aufweist. Die Erfindung bezieht sich auch auf ein Verfahren zur Herstellung derartiger Gleitelemente.

Wartungsfreie Lagerwerkstoffe bestehen meist aus mehrschichtigen Materialien mit Oberflächen aus speziell modifizierten Kunststoffen. In einer häufig benutzten Ausführungsform weisen die Verbundwerkstoffe eine poröse metallische Komponente auf, die mit einer Kunststoffmasse imprägniert und von dieser überdeckt ist. Hierbei können nach Art des Matrixkunststoffes zwei Typen unterschieden werden: solche auf PTFE-Basis und solche auf der Basis thermoplastisch verarbeitbarer Kunststoffe. Die thermoplastischen Typen werden entweder mit Vertiefungen versehen, um eine dauerhaft wirkende Schmierstoffmenge aufnehmen zu können, oder sie werden bereits in Form eines mit Schmierstoffen modifizierten Compounds verwendet.

Es hat sich herausgestellt, dass einige dieser Werkstofftypen mit ihren Kunststoffgleitflächen aufgrund ihrer guten Anpassungs- und Schmutzaufnahmefähigkeit sowie hoher Verschleißbeständigkeit auch in mediengeschmierten Anwendungen, wie Pumpen oder hydraulischen Stoßdämpfern, vorteilhaft gegenüber rein metallischen Lagerwerkstoffen einsetzbar sind. Dabei zeichnen sich die PTFE-basierten Werkstoffe durch einen besonders niedrigen Reibkoeffizienten bei Medienschmierung aus, während thermoplastische Werkstoffe sehr verschleißbeständig sein können. Allerdings weisen die thermoplastischen Materialien trotz ihrer Modifizierung einen deutlich höheren Reibungskoeffizienten bei Medienschmierung auf.

Thermoplastische Lagerwerkstoffe werden seit vielen Jahren in besonders verschleißintensiven mediengeschmierten Anwendungen eingesetzt, wie dies beispielsweise in der DE 32 21 785 C2 beschrieben wird. Der Gleitlagerverbundwerkstoff basiert auf PEEK und ist durch Graphit, PTFE und Kohlenstofffasern modifiziert. Er kommt z. B. in Stoßdämpfern zum Einsatz, bei denen aufgrund extremer Belastungen Dauerfestigkeit wichtiger ist als ein möglichst reibungsarmes Ansprechverhalten.

Die DE 102 26 264 B4 beschreibt ein speziell für hohe Temperaturen entwickeltes modifiziertes PEEK-Material mit hoher Verschleißfestigkeit. Der Gleitlagerverbundwerkstoff weist eine Stützschicht, gegebenenfalls eine Trägerschicht und eine auf der Trägerschicht oder der Stützschicht aufgebrachte Gleitschicht auf, die PEEK als Matrixmaterial, eine härtende Komponente aus Titandioxid und/oder Siliziumcarbid sowie einen Schmierstoff in Form von Zinksulfid und/oder Bariumsulfat aufweist. Mit diesem Material können allerdings die niedrigen Reibkoeffizienten von Werkstoffen auf PTFE-Basis bei Medienschmierung nicht erreicht werden.

In der DE 198 08 540 B4 werden Materialien auf Thermoplast-Basis beschrieben, die durch einen relativ hohen PTFE-Anteil und den Verzicht auf harte Zusatzstoffe bereits günstigere Reibwerte aufweisen, die jedoch ebenfalls noch deutlich über denen der Materialien auf PTFE-Basis liegen.

Die Menge des zusetzbaren PTFE ist begrenzt, da ein zu hoher Anteil die thermoplastische Matrix schwächt, was sich negativ auf den Verschleißwiderstand des Materials auswirkt.

Zur Herstellung der Thermoplastschichten sind im Wesentlichen zwei Verfahren bekannt:
a) Auftragung einer Pulvermischung auf das metallische Substrat mit anschließendem Aufschmelzen und Verwalzen, wie dies in der DE 32 21 785 C2 beschrieben wird,
b) Herstellung einer Compound-Folie unter Aufwalzen auf das metallische Substrat, wie dies in der DE 102 26 264 B4 erläutert wird.

Die DE 195 07 045 C2 beschreibt ein Verbundmaterial, bei dem für die Herstellung der Gleitschicht eine Paste aufgetragen wird, die ein Fluorpolymerisat, z. B. aus PTFE aufweist. Andere Fluorpolymerisate wie PFA, FEP, ETFE sind allein oder in Kombination ebenfalls vorgesehen.

PTFE-Schichten können ebenfalls über den Zwischenschritt einer Folie und Aufbringen auf das Trägermaterial oder durch direktes Aufwalzen einer wässrigen Kunststoffmasse auf der Basis einer PTFE-Dispersion erzeugt werden, wie dies in der DE 195 07 045 C2 beschrieben wird.

Die WO 03/026884 A1 offenbart ein Verfahren zur Herstellung von Lagermaterialien, bei dem eine Bahn eines metallischen Stützgewebes kontinuierlich mit einer einseitig das Stützgewebe überdeckenden, überweigend Polytetrafluorethylen (PTFE) enthaltenden Gleitschicht versehen wird, wobei das Stützgewebe mit einer Paste des Materials der Gleitschicht beschichtet wird und das Stützgewebe während der Beschichtung einseitig im vollflächigen Kontakt mit einer weiteren Warenbahn geführt wird.

Die Aufgabe der Erfindung besteht darin, ein Gleitelement auf Thermoplastbasis bereitzustellen, dessen Reibungskoeffizient gegenüber Gleitelementen mit Gleitschichten aus thermoplastischen Werkstoffen bei Medienschmierung deutlich verbessert ist.

Diese Aufgabe wird mit einem Gleitelement mit einer metallischen Stützschicht, mit einer darauf aufgebrachten porösen metallischen Trägerschicht und mit einer auf der Trägerschicht aufgebrachten Gleitschicht der Dicke D gelöst, die mindestens ein Thermoplastmaterial als Matrixmaterial aufweist, wobei die Gleitschicht ein erstes Material, das die Thermoplastmatrix enthält, und ein enthaltendes Material aufweist, das in einem Oberflächenbereich des ersten Materials über eine Tiefe T ≤ D einen Gradienten bildet.

Unter dem Gradienten in einem Oberflächenbereich der Gleitschicht wird eine kontinuierliche Abnahme des Anteils des zweiten Materials innerhalb des ersten Materials von der Oberfläche der Gleitschicht bis zu einer bestimmten Eindringtiefe T in der Gleitschicht verstanden.

Aufgrund der Tatsache, dass das zweite Material PTFE enthält, wird durch die Gradientenbildung auch ein PTFE-Gradient gebildet, so dass die Gleiteigenschaften und die Verschleißbeständigkeit der Gleitschicht gezielt eingestellt werden können. Hierbei nimmt die Verschleißbeständigkeit mit zunehmendem Abtrag der Gleitschicht zu, weil sich der PTFE-Anteil verringert, während die Gleiteigenschaften sich aufgrund der Abnahme des PTFE-Anteils in der Gleitschicht gleichzeitig geringfügig verschlechtern.

Über die Wahl des zweiten Materials, das PTFE enthält, und über den Anteil des PTFE im zweiten Material lassen sich somit die Gleiteigenschaften des thermoplastischen Materials deutlich verbessern und in der gewünschten Weise für die Lebensdauer des Gleitlagerelementes einstellen.

Während der Lebensdauer eines Gleitelementes werden ca. 75% der Gleitschicht abgetragen. Damit das PTFE über die gesamte Lebensdauer das Gleitverhalten positiv beeinflussen kann, wird T entsprechend eingestellt. Vorzugsweise beträgt die Tiefe T ≤ 0,75 · D, insbesondere ≤ 0,5 · D.

Das erste Material, das das thermoplastische Material enthält, weist vorzugsweise eine Porenstruktur auf, die vom zweiten Material mindestens teilweise ausgefüllt ist.

Wenn das Volumen der Poren der Porenstruktur mit zunehmender Tiefe abnimmt, kann auf diese Weise der Gradient in der Gleitschicht eingestellt werden. Der Gradient wird somit über die Porenstruktur definiert.

Als Thermoplastmatrix sind vorzugsweise PEEK (Polyetheretherketon), PPS (Polyphenylensulfid), PA (Polyamid), PVDF (Polyvinylidenfluorid), PFA (Poly(tetraf(uorethylen-co-perfluorvinylalkylether)), ETFE (Polyethylen-alttetrafluorethylen), PPA (Polyphthalamid), LCP (flüssigkristalline Polymere), PES (Polyethersulfon), PSU (Polysulfon), PEI (Polyetherimid) einzeln oder als Mischungen vorgesehen.

Die Thermoplastmatrix kann Zusätze aus Hochtemperatur-Thermoplasten, Festschmierstoffen, Hartstoffen und/oder Fasern enthalten.

Durch den Zusatz aus mindestens einem Hochtemperaturthermoplasten kann die Verschleißbeständigkeit weiter erhöht werden.

Vorzugsweise beträgt der Anteil der Hochtemperaturthermoplasten 0,5 bis 15 Vol.-% bezogen auf das Gesamtvolumen des ersten Materials. Der Vorteil dieser Anteile der Hochtemperaturthermoplaste liegt darin, dass einerseits eine verschleißmindernde Wirkung erzielt wird, andererseits der Matrixverbund nicht durch zu große Mengen von Zusätzen geschwächt wird.

Als Hochtemperaturthermoplaste sind vorzugsweise PPTA (Poly-p-phenylenterephthalamid), PPSO2 (Polyphenylensulfon), PPA (Polyphthalamid), PI (Polyimid), PAI (Polyamidimid), PBI (Polybenzimidazol) einzeln oder in Kombination vorgesehen.

Das erste Material enthält vorzugsweise 0 bis 27,5 Vol.-% an Schmierstoffen bezogen auf das Gesamtvolumen des ersten Materials.

Je nach Eindringtiefe, die die Porenstruktur zulässt, wird der Anteil des Festschmiermittels gewählt. Wenn sich der Gradient beispielsweise nur bis zur halben Dicke der Gleitschicht erstrecken kann, ist es von Vorteil, den Anteil des Festschmiermittels hoch zu wählen, z. B. > 15 Vol.-%. So stehen auch dann noch ausreichende Gleiteigenschaften zur Verfügung, wenn die Gleitschicht soweit abgetragen ist, dass der PTFE-Gradient verschwunden ist.

Vorzugsweise werden im ersten Material als Festschmierstoffe PTFE, MoS2, WS2, hBN (hexagonales Bornitrid), Pb, PbO, ZnS, BaSO4 und/oder Graphit einzeln oder in Kombination eingesetzt.

Vorzugsweise enthält das erste Material Hartstoffe mit einem Anteil von 0 bis 10 Vol.-% bezogen auf das Gesamtvolumen des ersten Materials. Bevorzugte Hartstoffe sind SiC, Si3N4, BC, cBN (kubisches Bornitrid), Schichtsilikate und/oder Metalloxide wie TiO₂ und/oder Fe₂O₃. Der Vorteil der Zugabe von Hartstoffen besteht darin, dass diese eine Glättung des Gegenläufers bewirken können, wodurch sich dessen Abrasivität verringert.

Weiter kann das erste Material Zusätze aus Fasern enthalten. Vorzugsweise handelt es sich um Kohlefasern, Aramidfasern und/oder Glasfasern. Die Menge der Fasern kann zwischen 0 und 10 Vol.-%, vorzugsweise zwischen 0,5 und 5 Vol.-% bezogen auf das Gesamtvolumen des ersten Materials liegen.

Das zweite Material kann vollständig aus PTFE bestehen oder es besteht aus PTFE und einem Zusatzmaterial. Im zweiten Fall beträgt der Anteil des PTFE mindestens 70 Vol.-% bezogen auf das Gesamtvolumen des zweiten Materials.

Das Zusatzmaterial weist vorzugsweise 0 bis 20 Vol.-% PFA, insbesondere 1 bis 20 Vol.-% PFA (Poly(tetrafluorethylen-co-perfluorvinylalkylether)) bezogen auf das Volumen des PTFE auf. Die Zugabe von PFA hat den Vorteil, dass die Anbindung des zweiten Materials an das erste Material verbessert wird.

Das Zusatzmaterial kann 0 bis 100 Vol.-% Festschmierstoffe, bezogen auf das Gesamtvolumen des Zusatzmaterials enthalten. Die Zugabe von Festschmierstoffen als Zusatzmaterial zum zweiten Material wird insbesondere dann vorgenommen, wenn die Mengen an Festschmierstoff im ersten Material gering gewählt werden. Als Festschmierstoffe sind vorzugsweise PTFE, MoS2, WS2, hBN, Pb, PbO, ZnS, BaSO4 und/oder Graphit vorgesehen. Außerdem kann das zweite Material Hartstoffe mit einem Anteil von 0 bis 10 Vol.-% bezogen auf das Gesamtvolumen des zweiten Materials aufweisen. Bevorzugte Hartstoffe sind SiC, Si3N4, BC, cBN, Schichtsilikate und/oder Metalloxide wie TiO₂ und/oder Fe₂O₃.

Der Anteil des zweiten Materials an dem Gesamtvolumen der Gleitschicht hängt zum einen von dem Volumen der Porenstruktur in dem ersten Material und zum anderen von der Dicke der Deckschicht ab, die vom zweiten Material ausgebildet wird und die über das Material des ersten Materials übersteht. Diese Dicke d der Deckschicht liegt vorzugsweise bei 0 ≤ d ≤ 15 µm.

Das Verfahren zur Herstellung solcher Gleitelemente sieht folgende Verfahrensschritte vor:
- Bereitstellen einer metallischen Stützschicht mit einer darauf aufgebrachten porösen metallischen Trägerschicht,
- Erzeugen einer Gleitschicht auf der metallischen Trägerschicht mit den folgenden Schritten:
   o Aufstreuen eines ersten Materials aus einer mindestens ein Thermoplastmaterial aufweisenden Pulvermischung,
   o Verdichten des ersten Materials,
   o Imprägnieren des verdichteten ersten Materials mit einer Dispersion eines zweiten, PTFE aufweisenden zweiten Materials,
   o Aufschmelzen der Gleitschicht und
   o Walzen der Gleitschicht.

Das Verdichten des ersten Materials ist vorzugsweise ein Kaltverdichten, das zwischen Raumtemperatur(20°C) bis 100°C durchgeführt wird.

Durch die Kapillarwirkung der Porenstruktur in der kaltverdichteten Pulverschicht zieht die Dispersion in das erste Material ein und es entsteht ein Gradient der Dispersion und somit ein Gradient der PTFE-Konzentration.

Die Dispersion des zweiten Materials ist vorzugsweise eine 25 bis 55%ige wässrige PTFE-Dispersion.

Als Alternative kann die Dispersion des zweiten Materials aus einer ersten 25 bis 55%igen wässrigen PTFE-Dispersion und einer zweiten Dispersion aus einem Zusatzmaterial bestehen.

Die zweite Dispersion weist vorzugsweise eine PFA-Dispersion auf. Die zweite Dispersion kann ausschließlich aus dieser PFA-Dispersion bestehen oder die zweite Dispersion kann auch noch Festschmierstoffe und/oder Hartstoffe aufweisen.

Vorzugsweise werden 1 m² der Trägerschicht mit 5 g bis 100 g der Dispersion des zweiten Materials imprägniert.

Die Menge an PTFE, die über die Dispersion in die Gleitschicht eingebracht wird, kann in bestimmten Grenzen variiert werden. Bei sehr geringen Mengen reduziert sich der reibungsmindernde Effekt entsprechend. Zu große Mengen an PTFE weichen die kaltverdichtete Pulverschicht auf, so dass nach dem Aufschmelzen im Ofen keine kompakte Schicht mehr erreicht werden kann. Als Faustregel sollten ungefähr 5 g bis 100 g, vorzugsweise 50 g PTFE (fest) auf einem Quadratmeter aufgebracht werden, am besten in Form einer 30 bis 50%igen wässrigen stabilen Dispersion.

Insbesondere bevorzugt ist es, die Mengen pro Quadratmeter der Dispersion des zweiten Materials derart zu wählen, dass der PTFE-Anteil pro Quadratmeter 40 g bis 60 g, insbesondere 45 g bis 55 g beträgt.

Es ist vorgesehen, das Imprägnieren mittels einer der folgenden Verfahren durchzuführen:
- Spritzen mit einer Düse,
- Übertragen von einer Walzenoberfläche,
- Übertragen durch Aufdrücken eines Schwamms oder einer Walze,
- Aufschleudern mit einem rotierenden Teller,
- Siebdruckverfahren,
- Kontakt mit einem kapillaren Dosiersystem in Art eines Pinsels mit Borsten, Filz oder Gewebe.

Das Gleitelement ist vorzugsweise ein Gleitlagerelement.

Das erfindungsgemäße Gleitelement eignet sich insbesondere für mediengeschmierte Anwendungen, insbesondere im Bereich von Stoßdämpfern und Pumpen.

Beispielhafte Ausführungsformen der Erfindung werden nachfolgend anhand der Zeichnungen näher erläutert.

Es zeigen:

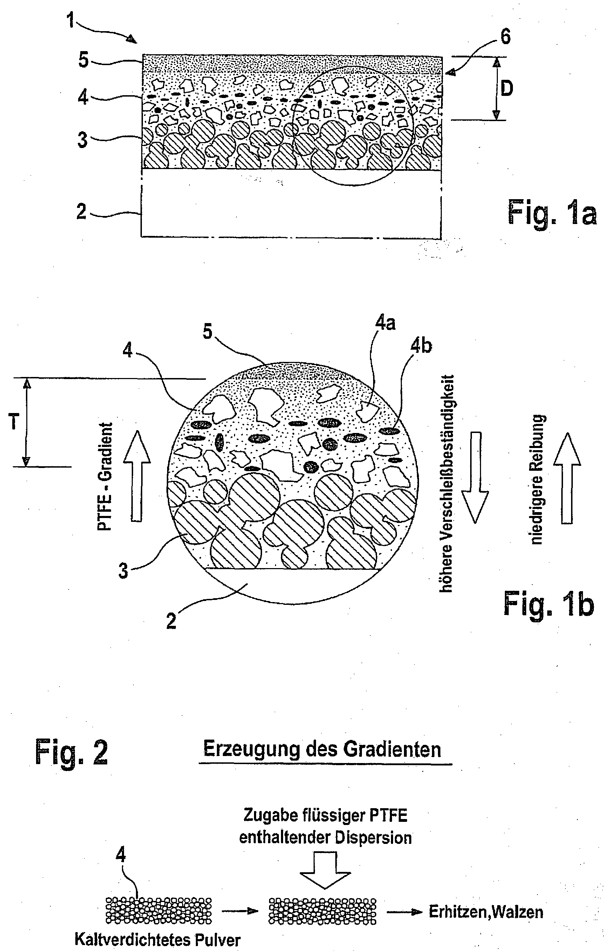

- Figur 1 a: ein Schliffbild eines erfindungsgemäßen Gleitelementes,
- Figur 1 b: einen vergrößerten Ausschnitt aus dem Schliffbild der Figur 1a, und
- Figur 2: eine schematische Darstellung des Herstellungsverfahrens.

In der Figur 1a ist schematisch ein Schliffbild eines Gleitelements, insbesondere eines Gleitlagerelementes 1, dargestellt, das eine Stahlstützschicht 2 und darauf aufgebracht eine poröse Bronze-Trägerschicht 3 aufweist. Auf der Bronze-Trägerschicht 3 ist eine Gleitschicht 6 der Dicke D aufgebracht, die aus einem ersten Material 4 und einem zweiten Material 5 besteht.

Das erste Material 4 besteht aus einem Thermoplast-Compound, das mit einem zweiten Material 5 in Form einer Dispersion, die PTFE enthält, imprägniert worden ist. Aufgrund der Porenstruktur des ersten Materials 4 kann das PTFE-haltige zweite Material 5 während des Imprägnierprozesses eindringen und aufgrund der Porenstruktur bildet sich dann der Gradient aus.

In der Figur 1 b ist ein Ausschnitt aus dem Schliffbild der Figur 1 a vergrößert dargestellt. Die unterschiedliche Grauabstufung im oberen Bereich deutet den imprägnierten Bereich und somit den Gradienten an. Sowohl innerhalb des ersten Materials 4 als auch innerhalb des zweiten Materials 5 können sich zusätzliche Partikel befinden, die in der hier gezeigten Darstellung aus Schmiermittelpartikeln 4b und aus Partikeln aus Hochtemperaturthermoplasten 4a bestehen.

Gemäß Figur 2 wird das Pulver des ersten Materials 4 kalt verdichtet und anschließend wird die flüssige PTFE-Dispersion zugegeben. Anschließend wird das Gleitschichtmaterial erhitzt und gewalzt.

Folgende erste Materialien (alle Angaben in Vol.-% bezogen auf das Gesamtvolumen des ersten Materials)
(a) PEEK, 20% PTFE
(b) PEEK, 10% Graphit, 10% C-Fasern, 5% Zinksulfid, 5% Titanoxid
(c) PEEK, 10% Graphit, 10% C-Fasern, 10% PTFE
(d) PVDF, 20% PTFE
(e) PPS, 15% PTFE, 5% Polyaramid
wurden mit folgenden zweiten Materialien (alle Angaben in Vol.-% bezogen auf das Gesamtvolumen des zweiten Materials)
(1) 100% PTFE
(2) PTFE, 5% Fe2O3
(3) PTFE, 10% MoS2
(4) PTFE, 10% MoS2, 10% BN
(5) PTFE, 30% BN
(6) PTFE, 20% ZnS
(7) PTFE, 15% CaF2
zu einer Gleitschicht 6 kombiniert.

Das Ergebnis der Stift-Walze-Prüfung mit Tropfölschmierung bei 0,5 m/s und 20 MPa spez. Belastung enthält folgende Tabelle:

| **Ohne Imprägnierung** | | | | **Mit Imprägnierung** | | | |
|---|---|---|---|---|---|---|---|
| **1.Material** | **2.Material (Dispersionsgemisch)** | **Reib.-Koeff COF nach 1 h** | **Verschleiß [µm] nach 1 h** | **COF nach 1 h** | **Verschleiß [µm] nach 1 h** | **COF nach 2 h** | **Verschleiß [µm] nach 2 h** |
| a | 1 | 0,085 | 5 | 0,056 | 13 | 0,06 5 | 20 |
| a | 3 | 0,085 | 5 | 0,058 | 11 | 0,06 6 | 17 |
| a | 6 | 0,085 | 5 | 0,061 | 11 | 0,06 9 | 15 |
| b | 1 | 0,125 | 3 | 0,087 | 9 | 0,09 4 | 14 |
| b | 7 | 0,125 | 3 | 0,083 | 6 | 0,09 | 9 |
| c | 1 | 0,11 | 2 | 0,07 | 7 | 0,08 1 | 11 |
| c | 4 | 0,11 | 2 | 0,078 | 5 | 0,08 1 | 8 |
| d | 1 | 0,06 | 10 | 0,044 | 20 | 0,05 2 | 30 |
| d | 5 | 0,06 | 10 | 0,05 | 12 | 0,06 | 20 |
| e | 1 | 0,07 | 5 | 0,046 | 16 | 0,04 9 | 22 |
| e | 2 | 0,07 | 5 | 0,056 | 5 | 0,06 | 8 |

| | | | | | | | |
|---|---|---|---|---|---|---|---|
| COF bezeichnet den Reibungskoeffizienten. | | | | | | | |

Die Tabelle zeigt, dass die Gleitschicht ohne Imprägnierung nach einer Stunde einen deutlich geringeren Verschleiß zeigt als die Gleitschicht mit Imprägnierung. Dafür liegt jedoch der Reibungskoeffizient (COF) deutlich unter dem des nicht imprägnierten Materials.

## Patentansprüche

1. Gleitelement mit einer metallischen Stützschicht (2), mit einer darauf aufgebrachten metallischen porösen Trägerschicht (3) und mit einer auf der Trägerschicht aufgebrachten Gleitschicht (6) der Dicke D, die mindestens ein Thermoplastmaterial als Matrixmaterial aufweist, **dadurch gekennzeichnet,**
**dass** die Gleitschicht (6) ein erstes Material (4), das die Thermoplastmatrix enthält, und
ein zweites PTFE enthaltendes Material (5) aufweist, das in einem Oberflächenbereich des ersten Materials (4) über eine Tiefe T ≤ D einen Gradienten bildet.

2. Gleitelement nach Anspruch 1, **dadurch gekennzeichnet, dass** das erste Material (4) eine Porenstruktur aufweist, die vom zweiten Material (5) mindestens teilweise ausgefüllt ist.

3. Gleitelement nach einem der Ansprüche 1 oder 2, **dadurch gekennzeichnet, dass** das erste Material 0 bis 27,5 Vol.-% mindestens eines Festschmierstoffs bezogen auf das Gesamtvolumen des ersten Materials (4) enthält.

4. Gleitelement nach einem der Ansprüche 1 bis 3, **dadurch gekennzeichnet, dass** das erste Material (4) 0 bis 10 Vol.-% mindestens eines Hartstoffes bezogen auf das Gesamtvolumen des ersten Materials (4) enthält.

5. Gleitelement nach einem der Ansprüche 1 bis 4, **dadurch gekennzeichnet, dass** das erste Material (4) 0 bis 10 Vol.-% Fasern bezogen auf das Gesamtvolumen des ersten Materials enthält.

6. Gleitelement nach einem der Ansprüche 1 bis 5, **dadurch gekennzeichnet, dass** das zweite Material (5) aus PTFE besteht.

7. Gleitelement nach einem der Ansprüche 1 bis 6, **dadurch gekennzeichnet, dass** das zweite Material (5) aus PTFE und einem Zusatzmaterial besteht.

8. Gleitelement nach einem der Ansprüche 1 bis 7, **dadurch gekennzeichnet, dass** das zweite Material (5) 0 bis 10 Vol.-% mindestens eines Hartstoffes bezogen auf das Gesamtvolumen des zweiten Materials (5) enthält.

9. Verfahren zur Herstellung eines Gleitelementes mit folgenden Schritten:
- Bereitstellen einer metallischen Stützschicht mit einer darauf aufgebrachten porösen metallischen Trägerschicht,
- Erzeugen einer Gleitschicht auf der metallischen Trägerschicht mit den folgenden Schritten:
o Aufstreuen eines ersten Materials aus einem mindestens ein Thermoplastmaterial aufweisenden Pulvermischung,
o Verdichten des ersten Materials,
o Imprägnieren des verdichteten ersten Materials mit einer Dispersion eines zweiten, PTFE aufweisenden Materials,
o Aufschmelzen der Gleitschicht und
o Walzen der Gleitschicht.

10. Verfahren nach Anspruch 9, **dadurch gekennzeichnet, dass** das Verdichten des ersten Materials ein Kaltverdichten bei Temperaturen von 20°C bis 100°C ist.

11. Verfahren nach Anspruch 9 oder 10, **dadurch gekennzeichnet, dass** die Dispersion des zweiten Materials eine 25 bis 55%ige wässrige PTFE-Dispersion ist.

12. Verfahren nach einem der Ansprüche 9 bis 11, **dadurch gekennzeichnet, dass** die Dispersion des zweiten Materials aus einer ersten 25 bis 55%igen wässrigen PTFE-Dispersion und einer zweiten Dispersion aus einem Zusatzmaterial besteht.

13. Verfahren nach einem der Ansprüche 25 bis 30, **dadurch gekennzeichnet, dass** 1m² der Trägerschicht mit 5 g bis 100 g der Dispersion des zweiten Materials imprägniert wird.

14. Verfahren nach einem der Ansprüche 9 bis 13, **dadurch gekennzeichnet, dass** das Imprägnieren mittels eines der folgenden Verfahren durchgeführt wird:
- Spritzen mit einer Düse,
- Übertragen von einer Walzenoberfläche,
- Übertragen durch Aufdrücken eines Schwamms oder einer Walze,
- Aufschleudem mit einem rotierenden Teller,
- Siebdruckverfahren,
- Kontakt mit einem kapillaren Dosiersystem in Art eines Pinsels mit Borsten, Filz oder Gewebe.

15. Verwendung des Gleitelements nach Anspruch 1 für mediengeschmierte Anwendungen.

## Claims

1. Sliding element having a metal protective layer (2), having a metal porous carrier layer (3) which is applied thereto and having a sliding layer (6) which is applied to the carrier layer and which has the thickness D and which has at least one thermoplastic material as a matrix material, **characterised in that**
the sliding layer (6) has a first material (4) which contains the thermoplastic matrix and
a second material (5) which contains PTFE and which forms a gradient in a surface region of the first material (4) over a depth T ≤ D.

2. Sliding element according to claim 1, **characterised in that** the first material (4) has a pore structure which is at least partially filled by the second material (5).

3. Sliding element according to either claim 1 or claim 2, **characterised in that** the first material contains from 0 to 27.5% by volume of at least one solid lubricant with respect to the total volume of the first material (4).

4. Sliding element according to any one of claims 1 to 3, **characterised in that** the first material (4) contains from 0 to 10% by volume of at least one hardening agent with respect to the total volume of the first material (4).

5. Sliding element according to any one of claims 1 to 4, **characterised in that** the first material (4) contains from 0 to 10% by volume of fibres with respect to the total volume of the first material.

6. Sliding element according to any one of claims 1 to 5, **characterised in that** the second material (5) comprises PTFE.

7. Sliding element according to any one of claims 1 to 6, **characterised in that** the second material (5) comprises PTFE and an additive material.

8. Sliding element according to any one of claims 1 to 7, **characterised in that** the second material (5) contains from 0 to 10% by volume of at least one hardening agent with respect to the total volume of the second material (5).

9. Method for producing a sliding element having the following steps:
- providing a metal protective layer with a porous metal carrier layer which is applied thereto,
- producing a sliding layer on the metal carrier layer with the following steps:
• scattering a first material comprising a powder mixture which has at least one thermoplastic material,
• compressing the first material,
• impregnating the compressed first material with a dispersion of a second material which has PTFE,
• melting the sliding layer and
• rolling the sliding layer.

10. Method according to claim 9, **characterised in that** the compression of the first material is a cold compression at temperatures from 20°C to 100°C.

11. Method according to claim 9 or 10, **characterised in that** the dispersion of the second material is a 25 to 55% aqueous PTFE dispersion.

12. Method according to any one of claims 9 to 11, **characterised in that** the dispersion of the second material comprises a first 25 to 55% aqueous PTFE dispersion and a second dispersion of an additive material.

13. Method according to any one of claims 9 to 12, **characterised in that** 1 m² of the carrier layer is impregnated with from 5 g to 100 g of the dispersion of the second material.

14. Method according to any one of claims 9 to 13, **characterised in that** the impregnation is carried out by means of one of the following methods:
- injection with a nozzle,
- transfer from a roller surface,
- transfer by pressing a sponge or a roller,
- centrifuging with a rotating plate,
- screen printing method,
- contact with a capillary metering system in the manner of a paintbrush with bristles, felt or woven fabric.

15. Use of the sliding element according to claim 1 for media-lubricated applications.

## Revendications

1. Elément de glissement avec une couche de soutien métallique (2) sur laquelle est appliquée une couche porteuse métallique poreuse (3), et avec une couche de glissement (6) d'épaisseur D qui est appliquée sur la couche porteuse et qui présente au moins un matériau thermoplastique comme matériau de matrice,
**caractérisé en ce que** la couche de glissement (6) présente un premier matériau (4) qui contient la matrice thermoplastique,
et un deuxième matériau (5) contenant du polytétrafluoréthylène (PTFE), matériau qui forme un gradient sur une profondeur T ≤ D dans une zone superficielle du premier matériau (4).

2. Elément de glissement selon la revendication 1, **caractérisé en ce que** le premier matériau (4) présente une structure poreuse qui est au moins partiellement remplie par le deuxième matériau (5).

3. Elément de glissement selon la revendication 1 ou 2, **caractérisé en ce que** le premier matériau contient 0 à 27,5% (en pourcentage volumique) d'au moins un lubrifiant solide, relativement au volume total du premier matériau (4).

4. Elément de glissement selon l'une des revendications 1 à 3, **caractérisé en ce que** le premier matériau (4) contient 0 à 10 % (en pourcentage volumique) d'au moins un matériau à résistance élevée, relativement au volume total du premier matériau (4).

5. Elément de glissement selon l'une des revendications 1 à 4, **caractérisé en ce que** le premier matériau (4) contient 0 à 10 % (en pourcentage volumique) de fibres, relativement au volume total du premier matériau.

6. Elément de glissement selon l'une des revendications 1 à 5, **caractérisé en ce que** le deuxième matériau (5) est constitué de polytétrafluoréthylène (PTFE).

7. Elément de glissement selon l'une des revendications 1 à 6, **caractérisé en ce que** le deuxième matériau (5) est constitué de polytétrafluoréthylène (PTFE) et d'un matériau additif.

8. Elément de glissement selon l'une des revendications 1 à 7, **caractérisé en ce que** le deuxième matériau (5) contient 0 à 10 % (en pourcentage volumique) d'au moins un matériau à résistance élevée, relativement au volume total du deuxième matériau (5).

9. Procédé de fabrication d'un élément de glissement, avec les étapes suivantes ;
- mise à disposition d'une couche de soutien métallique sur laquelle est appliquée une couche porteuse métallique poreuse,
- production d'une couche de glissement sur la couche porteuse métallique, avec les étapes suivantes :
- saupoudrage d'un premier matériau constitué d'un mélange pulvérulent présentant au moins un matériau thermoplastique,
- compactage du premier matériau,
- imprégnation du premier matériau compacté avec une dispersion d'un deuxième matériau présentant du polytétrafluoréthylène (PTFE),
- fusion de la couche de glissement et
- cylindrage de la couche de glissement.

10. Procédé selon la revendication 9, **caractérisé en ce que** le compactage du premier matériau est un compactage à froid à des températures de 20°C à 100°C.

11. Procédé selon la revendication 9 ou 10, **caractérisé en ce que** la dispersion du deuxième matériau est une dispersion de polytétrafluoréthylène (PTFE) avec 25 à 55% d'eau.

12. Procédé selon l'une des revendications 9 à 11, **caractérisé en ce que** la dispersion du deuxième matériau est constituée d'une première dispersion de polytétrafluoréthylène (PTFE) avec 25 à 55% d'eau et d'une deuxième dispersion d'un matériau additif.

13. Procédé selon l'une des revendications 9 à 12, **caractérisé en ce que** 1 m² de la couche porteuse est imprégnée avec 5 g à 100 g de la dispersion du deuxième matériau.

14. Procédé selon l'une des revendications 9 à 13, **caractérisé en ce que** l'imprégnation est effectuée au moyen d'un des procédés suivants :
- pulvérisation avec une buse,
- transfert d'une surface de cylindre,
- transfert par pression sur une éponge ou un cylindre,
- projection avec un plateau rotatif,
- sérigraphie,
- contact avec un système de dosage capillaire du type d'un pinceau avec des poils, un feutre ou un tissu.

15. Utilisation de l'élément de glissement selon la revendication 1 pour des applications avec lubrification par fluide.
